Europäisches Patentamt

European Patent Office

Office européen des brevets

(11) Publication number: 0 294 000
A2

# EUROPEAN PATENT APPLICATION

(21) Application number: 88201106.7

(22) Date of filing: 01.06.88

(51) Int. Cl.4: C07F 9/28 , C07F 9/50 , B01J 31/24 , C08G 67/02

(30) Priority: 05.06.87 NL 8701319

(43) Date of publication of application:
07.12.88 Bulletin 88/49

(84) Designated Contracting States:
BE CH DE FR GB IT LI NL

(71) Applicant: SHELL INTERNATIONALE
RESEARCH MAATSCHAPPIJ B.V.
Carel van Bylandtlaan 30
NL-2596 HR Den Haag(NL)

(72) Inventor: Van Doorn, Johannes Adrianus
Badhuisweg 3
NL-1031 CM Amsterdam(NL)
Inventor: Meijboom, Nicolaas
Badhuisweg 3
NL-1031 CM Amsterdam(NL)

(74) Representative: Aalbers, Onno et al
P.O. Box 302
NL-2501 CH The Hague(NL)

(54) Novel diaryl phosphides.

(57) Novel alkali metal diaryl phosphides of the general formula $R_7R_8PM$, wherein M represents an alkali metal, $R_7$ is an aryl group having one or more polar substituents at least one of which occupies an ortho position in respect of the phosphorus atom and $R_8$ represents an aryl group which contains no polar substituents occupying an ortho position in respect of the phosphorus atom.

EP 0 294 000 A2

# NOVEL DIARYL PHOSPHIDES

The invention relates to novel diaryl phosphides which are eligible for use as starting materials in the preparation of tetraaryl diphosphines. The latter compounds find use as components in catalyst compositions intended for the preparation of polymers of carbon monoxide with one or more olefinically unsaturated compounds.

High molecular weight linear polymers of carbon monoxide with one or more olefinically unsaturated compounds (for the sake of brevity referred to as A) in which the monomer units occur in alternating order and which polymers therefore consist of units of the general formula $-CO-(A')-$, wherein $A'$ represents a monomer unit derived from a monomer A used, can be prepared by using catalyst compositions based upon:

a) a palladium compound,

b) an anion of an acid with a pKa of less than 6, and

c) a tetraaryl diphosphine of the general formula $R_1R_2P-R-PR_3R_4$, wherein $R_1-R_4$ represent similar or different aromatic hydrocarbon groups and R is a bivalent bridging group containing at least two carbon atoms in the bridge.

Diphosphines which can be very suitably used as component c) in the catalyst compositions are diphosphines of the general formula $R_1R_2P-R-PR_1R_2$, wherein $R_1$ and $R_2$ represent similar or different aromatic hydrocarbon groups. In so far as the groups $R_1$ and $R_2$ are similar to one another and the diphosphines can therefore be represented by the general formula $(R_1)_2P-R-P(R_1)_2$, their preparation can be effected either by the reaction of an alkali metal diaryl phosphide $(R_1)_2PM$ with a dihalo compound X-R-X, or by the reaction of an aryl alkali metal compound $R_1M$ with a tetrahalo diphosphine $X_2P-R-PX_2$. For instance, 1,3-bis-(diphenyl-phosphino) propane can be prepared either by the reaction of $(C_6H_5)_2PNa$ with $Cl-(CH_2)_3-Cl$, or by the reaction of $C_6H_5Li$ with $Cl_2P-(CH_2)_3-PCl_2$. In view of the simple one-stage synthesis leading to the phosphorus-containing starting material for the first method of preparation, viz. by the reaction in liquid ammonia of an alkali metal M with a triaryl phosphine $(R_1)_3P$, and the very cumbersome multi-stage synthesis of the phosphorus-containing starting material for the second method of preparation, the first method of preparation is much to be preferred.

In the past, the Applicant has carried out an investigation into the above catalyst compositions. This investigation has shown that their performance can be considerably enhanced by incorporating as component c) a diphosphine of the general formula $R_5R_6P-R-PR_7R_8$, wherein $R_5$, $R_6$, $R_7$ and $R_8$ represent similar or different aromatic hydrocarbon groups which may or may not be substituted with polar groups, with the proviso that at least one of groups $R_5$, $R_6$, $R_7$ and $R_8$ contains at least one polar substituent, and wherein R has the meaning given hereinbefore. Very suited to be used as components c) in the catalyst compositions are diphosphines of the general formula $R_5R_6P-R-PR_5R_6$, wherein $R_5$ and $R_6$ represent similar of different aromatic hydrocarbon groups which may or may not be substituted with polar groups, with the proviso that at least one polar substituent is present in at least one of the groups $R_5$ and $R_6$. Comparison of the performances of catalyst compositions containing as component c) a diphosphine of the general formula $R_1R_2P-R-PR_1R_2$ with corresponding catalyst compositions which as the component c) contain a diphosphine of the general formula $R_5R_6P-R-PR_5R_6$ shows that at similar reaction rates for both compositions, the compositions having a polar-substituted diphosphine afford polymers with higher molecular weights and, alternatively, that when the two compositions are employed for preparing polymers with equal molecular weights, the compositions containing a polar-substituted diphosphine lead to higher reaction rates.

So far as the groups $R_5$ and $R_6$ are similar to one another and the polar-substituted diphosphines can therefore be represented by the general formula $(R_5)_2P-R-P(R_5)_2$, it holds both for these diphosphines and for the non-polar-substituted diphosphines of the general formula $(R_1)_2P-R-P-(R_1)_2$ that preparing these compounds by reacting an aryl alkali metal compound with a tetrahalo diphosphine is a very unattractive method on account of the very cumbersome multi-stage synthesis of the required phosphorus-containing starting materials, and that the method mentioned earlier for the preparation of non-polar substituted diphosphines, by reacting an alkali metal diaryl phosphide with a dihalo compound is to be preferred. As was stated hereinbefore in the discussion of the preparation of non-polar substituted diphosphines, the phosphorus-containing starting materials required for the synthesis thereof can be simply obtained by the reaction in liquid ammonia of an alkali metal M with a triaryl phosphine $(R_1)_3P$. Accordingly, the phosphorus-containing starting material required for the synthesis of the polar-substituted diphosphines of the general formula $(R_5)_2P-R-P(R_5)_2$ can be obtained by the reaction in liquid ammonia of an alkali metal M with a triaryl phosphine $(R_5)_3P$.

For the preparation of polar-substituted diphosphines of the general formula $R_5R_6P-R-PR_5R_6$ the above synthesis of the phosphorus-containing starting material by the reaction in liquid ammonia of an alkali metal M with a triaryl phosphine poses problems, since in general it cannot be predicted whether for this purpose the starting material should be a triaryl phosphine $(R_5)_2R_6P$ or a triaryl phosphine $R_5(R_6)_2P$. Similar problems arise in the preparation of non-polar-substituted diphosphines of the general formula $R_1R_2P-R-PR_1R_2$, wherein $R_1$ and $R_2$ represent different aromatic hydrocarbon groups.

The Applicant has carried out an investigation into the preparation of polar-substituted diphosphines of the general formula $R_7R_8P-R-PR_7R_8$, as well as into the synthesis of the phosphorus-containing starting material $R_7R_8PM$ required therefor, by the reaction in liquid ammonia of an alkali metal M with a triaryl phosphine $(R_7)_2R_8P$. This investigation has shown that alkali metal diaryl phosphides of the general formula $R_7R_8PM$, wherein $R_7$ is an aryl group containing one or more polar substituents at least one of which occupies an ortho position in respect to the phosphorus atom and $R_8$ represents an aryl group containing no polar substituents occupying an ortho position in respect to the phosphorus atom, can be prepared in high yields by the reaction in liquid ammonia of an alkali metal M with a triaryl phosphine of the general formula $(R_7)_2R_8P$.

Alkali metal diaryl phosphides of the general formula $R_7R_8PM$ are novel compounds.

The present patent application therefore relates to novel alkali metal diaryl phosphides of the general formula $R_7R_8PM$, in which M represents an alkali metal and $R_7$ and $R_8$ have the meanings given hereinbefore.

Examples of the novel alkali metal diaryl phosphides are
sodium 2-methoxy-phenyl,phenyl phosphide,
sodium 2-tert.butoxy-phenyl,phenyl phosphide,
sodium 2,4-dimethoxy-phenyl,phenyl phosphide,
sodium 2,4,6-trimethoxy-phenyl,phenyl phosphide,
sodium 2-methoxy-phenyl,4-methoxy-phenyl phosphide,
sodium 2,3-dimethoxy-phenyl,phenyl phosphide, and
sodium 2,6-dimethoxy-phenyl,phenyl phosphide.

The patent application further relates to the preparation of the novel alkali metal diaryl phosphides by the reaction in liquid ammonia of an alkali metal M with a triaryl phosphine of the general formula $(R_7)_2R_8P$, wherein $R_7$ and $R_8$ have the meanings given hereinbefore.

The alkali metal diaryl phosphides of the general formula $R_7R_8PM$ according to the invention are in the first place intended to be used as the starting material for the preparation of tetraaryl diphosphines of the general formula $R_7R_8P-R-PR_7R_8$, viz. tetraaryl diphosphines in which the two mutually different aryl groups which occur at one phosphorus atom are the same as the two aryl groups that occur at the other phosphorus atom. To this end, the alkali metal diaryl phosphides can be reacted with a dihalo compound of the general formula X-R-X wherein X represents chlorine or bromine. In so far as the bivalent bridging group R in the tetraaryl diphosphines of the general formula $R_7R_8P-R-PR_7R_8$ contains more than 2 carbon atoms in the bridge, these tetraaryl diphosphines are novel compounds. An example of these novel tetraaryl diphosphines is 1,3-bis(2-methoxy-phenyl,-phenyl-phosphino) propane. The alkali metal diaryl phosphides of the general formula $R_7R_8PM$ according to the invention are very suitable for use as the starting material for the preparation of tetraaryl diphosphines of the general formula $R_7R_8P-R-PR_9R_{10}$, wherein $R_9$ and $R_{10}$ represent similar or different aryl groups which may contain polar substituents. To this end, the alkali metal diaryl phosphides may be reacted with a monohalo compound of the general formula X-R-PR₉R₁₀. The tetraaryl diphosphines of the general formula $R_7R_8P-R-PR_9R_{10}$, wherein either one or both of the aryl groups $R_9$ and $R_{10}$ may optionally be similar to either one of the aryl groups $R_7$ and $R_8$, are also novel compounds. An example of these novel tetraaryl diphosphines is 1-diphenyl-phosphino,3-(2-methoxy-phenyl,phenyl-phosphino) propane. The present patent application also relates to the afore-mentioned tetraaryl diphosphines of the general formula $R_7R_8P-R-PR_7R_8$ wherein R contains more than two carbon atoms in the bridge, as well as to the afore-mentioned tetraaryl diphosphines of the general formula $R_7R_8P-R-PR_9R_{10}$ wherein either one or both of the aryl groups $R_9$ and $R_{10}$ may optionally be similar to either one of the aryl groups $R_7$ and $R_8$, as novel compounds.

The present patent application further relates to novel catalyst compositions based upon
a) a palladium compound,
b) an anion of an acid with a pKa of less than 6, and
c) any one of the novel tetraaryl diphosphines described hereinbefore.

Finally, the present patent application relates to the use of these novel catalyst compositions in the preparation of polymers of carbon monoxide with one or more olefinically unsaturated compounds, as well as to the polymers thus prepared and to shaped objects consisting at least partly of these polymers.

The alkali metal diaryl phosphides of the general formula $R_7R_8PM$ are prepared starting from triaryl phosphines of the general formula $(R_7)_2R_8P$.

Preferably, the aryl groups $R_7$ and $R_8$ in the general formulae are phenyl groups. If the polar-substituted aryl group $R_7$ is a phenyl group, it can contain at most five polar substituents, at least one of which must always occupy a position ortho to the phosphorus atom. $R_7$ preferably contains at most three polar substituents. If the aryl group $R_8$ is a polar-substituted phenyl group, it may contain at most three polar substituents. If a single polar substituent is present in $R_8$, it may occupy the 3-position or the 4-position. If two polar substituents are present in $R_8$, these may occupy the 3- and 4-positions or the 3- and 5-positions. If three polar substituents are present in $R_8$, these will have to occupy the 3-, 4- and 5-positions. $R_8$ is preferably a phenyl group containing no polar substituents or a polar-substituted phenyl group having one polar substituent in a position para to the phosphorus atom. If the polar-substituted aryl group $R_7$ contains two or more polar substituents, these polar substituents may be similar or different. Preference is given to similar polar substituents. This equally holds for the aryl group $R_8$ when it contains two or more polar substituents. In addition to one or more polar substituents, the aryl groups $R_7$ and $R_8$ may also include non-polar substituents, such as alkyl groups and in particular methyl groups. Eligible polar substituents include dialkyl-amino groups, such as dimethyl-amino groups and alkoxy groups, such as methoxy and tert.butoxy groups. The preferred polar substituents present in the aryl groups $R_7$ and $R_8$ are preferably alkoxy groups, and more in particular, methoxy groups.

The preparation of the alkali metal diaryl phosphides according to the invention is carried out by the reaction in liquid ammonia of an alkali metal M with a triaryl phosphine. Alkali metals that can be used are lithium, potassium and sodium.

Preference is given to the use of sodium as the alkali metal. It is preferred to employ about 2 mol of alkali metal per mol of triaryl phosphine to be converted. The quantity of liquid ammonia may vary within wide ranges. It is preferred to employ 1 to 125 ml and in particular 10 to 40 ml of liquid ammonia per mmol of alkali metal. In view of the fact that at atmospheric pressure liquid ammonia boils at about -33°C, the process if carried out at an atmospheric pressure should be carried out below -33°C. Preferably, the process is carried out at a temperature in the range of from -100 to -35°C and in particular of from -80 to -35°C. If the process is carried out under pressure, temperatures above -33°C may be employed, if desired.

As stated hereinbefore, the alkali metal diaryl phosphides according to the invention are of interest for their use as starting materials in the preparation of tetraaryl diphosphines, which can be used as components of catalyst compositions intended for the preparation of polymers of carbon monoxide with one or more olefinically unsaturated compounds.

As was stated hereinbefore, the present patent application also relates to novel catalyst compositions for the preparation of polymers of carbon monoxide with one or more olefinically unsaturated compounds, which catalyst compositions are based upon

a) a palladium compound,

b) an anion of an acid with a pKa of less than 6, and

c) any one of the novel tetraaryl diphosphines described hereinbefore.

The palladium compound employed in the catalyst compositions as component a) is preferably a palladium salt of a carboxylic acid and in particular palladium acetate. The component b) used in the catalyst compositions is preferably an anion of an acid with a pKa of less than 4 (determined in aqueous solution at 18°C) and in particular an anion of an acid with a pKa of less than 2. More specifically preferred is an anion of a sulphonic acid, such as para-toluenesulphonic acid or an anion of a carboxylic acid, such as trifluoro acetic acid. Component b) can be incorporated in the catalyst compositions in the form of an acid and/or in the form of a salt. Eligible salts include non-noble transition metal salts, such as copper salts. The component c) that is preferably used in the catalyst compositions is a tetraaryl diphosphine in which the bivalent bridging group R is a -$(CH_2)_3$- group. If desired, components a) and b) can be used combined in a single compound. An example of such a compound is the complex $Pd(CH_3CN)_2(O_3S-C_6H_4-CH_3)_2$, which can be prepared by the reaction of palladium chloride with the silver salt of para-toluenesulphonic acid in acetonitrile as the solvent. In addition to the components a), b) and c), the catalyst compositions may also include promoters. For this purpose, a 1,4-quinone and in particular a 1,4-naphthoquinone, is used by preference.

Eligible olefinically unsaturated compounds which can be polymerized with carbon monoxide by using the catalyst compositions described hereinbefore are both compounds which consist exclusively of carbon and hydrogen and compounds which, in addition to carbon and hydrogen, contain one or more hetero atoms. Preference is given to the preparation of polymers of carbon monoxide with one or more olefinically unsaturated hydrocarbons. Examples of suitable hydrocarbon monomers are ethene and other $\alpha$-olefins, such as propene, butene-1, hexene-1 and octene-1. The catalyst compositions of the invention are particularly suited to be used for the preparation of copolymers of carbon monoxide with ethene and for the preparation of terpolymers of carbon monoxide with ethene and another olefinically unsaturated hydrocarbon, such as propene. The polymerization is preferably carried out at a temperature of 20-200°C and a pressure of 1-200 bar and in particular at a temperature of 30-150°C and a pressure of 20-100 bar. The polymerization is typically carried out by contacting the monomers with a solution of the catalyst composition in an organic liquid in which the polymers are insoluble. If desired, the polymerization may be carried out in the gaseous phase.

The invention is now illustrated with the aid of the following examples.

## Example 1

Sodium 2-methoxy-phenyl,phenyl phosphide was prepared as follows. To 100 ml of liquid ammonia present in a mechanically stirred reaction vessel which was kept at -78°C by cooling, were successively added 8 mmol of sodium and 4 mmol of di(2-methoxy-phenyl),phenyl phosphine. After 4 hours, 4 mmol of ammonium chloride was added to the reaction mixture. After 15 minutes the ammonia was evaporated away. Analysis of the residue showed that 87% of the di(2-methoxy-phenyl)-,phenyl phosphine had been converted into sodium 2-methoxy-phenyl,phenyl phosphide.

## Example 2

Sodium 2-tert.butoxy-phenyl,phenyl phosphide was prepared substantially in the same way as the sodium 2-methoxy-phenyl, phenyl phosphide of Example 1, the difference being that instead of di(2-methoxy-phenyl),phenyl phosphine, di(2-tert.butoxy-phenyl),phenyl phosphine was used. 91% of the di(2-tert.butoxy-phenyl),phenyl phosphine was found to have been converted into sodium 2-tert.butoxy-phenyl,phenyl phosphide.

## Example 3

Sodium 2,4-dimethoxy-phenyl,phenyl phosphide was prepared substantially in the same way as the sodium 2-methoxy-phenyl, phenyl phosphide of Example 1, the difference being that instead of di(2-methoxy-phenyl),phenyl phosphine, di(2,4-dimethoxy-phenyl),phenyl phosphine was used. 23% of the di(2,4-dimethoxy-phenyl),phenyl phosphine was found to have been converted into sodium 2,4-dimethoxy-phenyl,phenyl phosphide.

## Example 4

Sodium 2,4,6-trimethoxy-phenyl,phenyl phosphide was prepared substantially in the same way as in Example 1, the difference being that instead of di(2-methoxy-phenyl),phenyl phosphine, di(2,4,6-trimethoxy-phenyl),phenyl phosphine was used. 71% of the di(2,4,6-trimethoxy-phenyl)-,phenyl phosphine was found to have been converted into sodium 2,4,6-trimethoxy-phenyl,phenyl phosphide.

## Example 5

Sodium 2-methoxy-phenyl,4-methoxy-phenyl phosphide was prepared substantially in the same way as the sodium 2-methoxy-phenyl,phenyl phosphide of Example 1, the difference being that instead of di(2-methoxy-phenyl),phenyl phosphine, di(2-methoxy-phenyl),4-methoxy-phenyl phosphine was used. The di(2-methoxy-phenyl),4-methoxy-phenyl phosphine was found to have been converted into sodium 2-methoxy-phenyl,4-methoxy-phenyl phosphide quantitatively.

## Example 6

Sodium 2,3-dimethoxy-phenyl,phenyl phosphide was prepared substantially in the same way as the sodium 2-methoxy-phenyl, phenyl phosphide of Example 1, the difference being that instead of di(2-methoxy-phenyl),phenyl phosphine, di(2,3-dimethoxy-phenyl),phenyl phosphine was used. 90% of the di(2,3-dimethoxy-phenyl),phenyl phosphine was found to have been converted into sodium 2,3-dimethoxy-phenyl,phenyl phosphide.

## Example 7

Sodium 2,6-dimethoxy-phenyl,phenyl phosphide was prepared substantially in the same way as the sodium 2-methoxy-phenyl, phenyl phosphide of Example 1, the difference being that instead of di(2-methoxy-phenyl),phenyl phosphine, di(2,6-dimethoxy-phenyl),phenyl phosphine was used. 87% of the di(2,6-dimethoxy-phenyl),phenyl phosphine was found to have been converted into sodium 2,6-dimethoxy-phenyl,phenyl phosphide.

## Example 8

1-Diphenyl-phosphino,3-(2-methoxy-phenyl,phenyl-phosphino) propane was prepared as follows. To 250 ml of liquid ammonia present in a stirred reaction vessel which was kept at -78°C by cooling, were successively added 1.11 mmol of sodium, 7.8 g of di(2-methoxy-phenyl),phenyl phosphine and 50 ml of tetrahydrofuran. After 6 hours, 1.3 g of ammonium chloride was added to the reaction mixture and then, after 30 minutes, a solution of 7.11 g of 1-diphenyl-phosphino,3-chloro propane in 50 ml of tetrahydro furan. After the cooling was cut off, the reaction mixture was stirred for another 16 hours and subsequently refluxed for 30 minutes. After evaporation of the reaction mixture, dichloro methane and water were added to the residue. The organic layer obtained was separated off, dried and filtered. Removal of the solvent afforded 9.6 g of 1-diphenyl-phosphino,3-(2-methoxy-phenyl,phenyl-phosphino) propane.

Example 9

1,3-bis(2-methoxy-phenyl,phenyl-phosphino) propane was prepared substantially in the same way as the 1-diphenyl-phosphino,3-(2-methoxy-phenyl,phenyl-phosphino) propane of Example 8, except for the following differences

a) 1.14 g instead of 1.11 g of sodium and 8.0 g instead of 7.8 g of di-(2-methoxy-phenyl)phenyl phosphine were added to the liquid ammonia,

b) 1.1 ml of 1,3-dichloro propane instead of a solution of 1-diphenyl-phosphino,3-chloro propane in tetrahydrofuran was added to the reaction mixture. 5.0 g of 1,3-bis(2-methoxy-phenyl,phenyl-phosphino) propane was obtained.

The starting triaryl phosphines used in Examples 2, 4 and 5, viz. di(2-tert.butoxy-phenyl),phenyl phosphine, di(2,4,6-trimethoxy-phenyl),phenyl phosphine and di(2-methoxy-phenyl),4-methoxy-phenyl phosphine are novel compounds. They can be obtained by known methods of preparing related triaryl phosphines, for instance by the reaction of a compound $R_6$ phosphorus dichloride with either a compound $R_5$ lithium or with a compound $R_5$ magnesium bromide.

Example 10

Sodium 2-dimethyl-amino phenyl,phenyl phosphide was prepared substantially in the same way as set out in example 1, the difference being that di(2-dimethyl-amino phenyl),phenyl phosphine was employed instead of di(2-methoxy-phenyl)-,phenyl phosphine. Yield was 99%. The phosphide so produced is a novel compound.

Claims

1. Novel alkali metal diaryl phosphides of the general formula $R_7R_8PM$, wherein M represents an alkali metal, $R_7$ is an aryl group having one or more polar substituents at least one of which occupies an ortho position in respect of the phosphorus atom and $R_8$ represents an aryl group which contains no polar substituents occupying an ortho position in respect of the phosphorus atom.

2. Alkali metal diaryl phosphides as claimed in claim 1, characterized in that $R_8$ is a phenyl group which contains no polar substituents, or a polar-substituted phenyl group which contains a single polar substituent in a position para with respect to the phosphorus atom.

3. Alkali metal diaryl phosphides as claimed in claim 1 or 2, characterized in that when $R_7$ and/of $R_8$ contain two or more substituents, these are alkoxy groups.

4. As novel alkali metal diaryl phosphides sodium 2-methoxy-phenyl,phenyl phosphide, sodium 2-tert.butoxy-phenyl,phenyl phosphide, sodium-2-dimethyl-amino phenyl,phenyl phosphide, sodium 2,4-dimethoxy-phenyl,phenyl phosphide, sodium 2,4,6-trimethoxy-phenyl,phenyl phosphide, sodium 2-methoxy-phenyl,4-methoxy-phenyl phosphide, sodium 2,3-dimethoxy-phenyl,phenyl phosphide and sodium 2,6-dimethoxy-phenyl,phenyl phosphide.

5. Process for the preparation of alkali metal diaryl phosphides as claimed in one or more of claims 1-4, characterized in that the preparation is carried out by the reaction in liquid ammonia of an alkali metal M with a triaryl phosphine of the general formula $(R_7)_2R_8P$.

6. Process for the preparation of tetraaryl diphosphines, characterized in that an alkali metal diaryl phosphide as claimed in one or more of claims 1-4 is reacted either with a compound of the general formula X-R-X, or with a compound of the general formula $X-R-PR_9R_{10}$, in which general formulae X represents chlorine of bromine, R is a bivalent bridging group containing at least two carbon atoms in the bridge and $R_9$ and $R_{10}$ represent similar of different aryl groups which may contain polar substituents and in which either one or both of the aryl groups $R_9$ and $R_{10}$ may optionally be similar to either one of the aryl groups $R_7$ and $R_8$.

7. Novel tetraaryl diphosphines of the general formula $R_7R_8P-R-PR_7R_8$, wherein $R_7$ represents an aryl group containing one or more polar substituents at least one of which occupies an ortho position in respect to the phosphorus atom to which $R_7$ is bound, wherein $R_8$ represents an aryl group which contains no polar substituents occupying an ortho position in respect to the phosphorus

atom to which $R_8$ is bound and wherein R represents a bivalent bridging group containing more than two carbon atoms in the bridge.

8. Novel tetraaryl diphosphines of the general formula $R_7R_8P\text{-}R\text{-}PR_9R_{10}$, wherein $R_7$ represents an aryl group containing one or more polar substituents at least one of which occupies an ortho position in respect to the phosphorus atom to which $R_7$ is bound, wherein $R_8$ represents an aryl group which contains no polar substituents occupying an ortho position in respect to the phosphorus atom to which $R_8$ is bound, wherein $R_9$ and $R_{10}$ represent similar or different aryl groups containing polar substituents, and wherein either one or both of the aryl groups $R_9$ and $R_{10}$ may optionally be similar to either one of the aryl groups $R_7$ and $R_8$, and wherein R represents a bivalent bridging group having at least two carbon atoms in the bridge.

9. As novel compounds 1-diphenyl-phosphino,3-(2-methoxy-phenyl, phenyl-phosphino) propane, 1,3-bis(2-methoxy-phenyl,phenyl-phosphino) propane, di(2-tert.butoxy-phenyl),phenyl phosphine, di(2,4,6-trimethoxy-phenyl),phenyl phosphine and di(2-methoxy-phenyl)4-methoxy-phenyl phosphine.

10. Catalyst compositions, characterized in that they are based upon
    a) a palladium compound,
    b) an anion of an acid with a pKa of less than 6, and
    c) a tetraaryl diphosphine as claimed in one or more of claims 7-9.

11. Process for the preparation of polymers, characterized in that a mixture of carbon monoxide with one or more olefinically unsaturated compounds is polymerized by using a catalyst composition as claimed in claim 10.